# EUROPÄISCHE PATENTSCHRIFT

(11) **EP 2 163 175 B1**
(45) Veröffentlichungstag und Bekanntmachung des Hinweises auf die Patenterteilung: **02.03.2016**
(21) Anmeldenummer: 09168887.9
(22) Anmeldetag: 28.08.2009
(51) Int. Cl.: A47J 25/00

(54) **Gerät zum Trennen des Kerns, der Schale und des Fleisches einer Frucht**
Device for separating the core, skin and flesh of a fruit
Appareil pour séparer le noyau, la peau et la chair d'un fruit

(30) Priorität: 10.09.2008 DE 102008046688
(43) Veröffentlichungstag der Anmeldung: 17.03.2010
(73) Patentinhaber: WMF WÜRTTEMBERGISCHE METALLWARENFABRIK AG, 73309 Geislingen/Steige (DE)
(72) Erfinder: Barth, Peter, 89601, Schelklingen (DE)
(74) Vertreter: BRP Renaud & Partner mbB Rechtsanwälte Patentanwälte Steuerberater

(56) Entgegenhaltungen:
- DE-T2- 69 109 804
- FR-A1- 2 772 581

## Beschreibung

Die vorliegende Erfindung betrifft ein Gerät zum Trennen des Kerns, der Schale und des Fleisches einer Frucht, insbesondere einer Ananas, gemäß dem Oberbegriff des Anspruchs 1.

Aus der DE 691 09 804 T2 ist ein gattungsgemäßes Gerät zum Trennen des Kerns, der Schale und des Fleisches einer Frucht, insbesondere einer Ananas, bekannt, welches einen zylindrischen Entkerner sowie ein sich radial auf diesem erstreckendes Fleischmesser aufweist. Sowohl der Entkerner als auch das Fleischmesser sind dabei mit einer Schneidkante versehen. Am Ende des Fleischmessers und gegenüber dem am Entkerner fixierten Ende, ist zusätzlich ein sich parallel zum Entkerner erstreckendes Schalenmesser vorgesehen, welches ebenfalls eine Schneidkante aufweist. Um das Trennen des Kerns, der Schale und des Fleisches der Frucht möglichst einfach ausführen zu können, ist das Fleischmesser schraubenförmig gestaltet, so dass es beim Drehen des Gerätes eine schraubenförmige Bewegung mit besagter Gewindesteigung in die zu bearbeitende Frucht ausführt. Mit der definierten Gewindesteigung (Ganghöhe) des Fleischmessers, sollen insbesondere Fruchtscheiben gleicher Dicke leicht herstellbar sein.

Die vorliegende Erfindung beschäftigt sich mit dem Problem, für ein Gerät der gattungsgemäßen Art, eine verbesserte Ausführungsform anzugeben, welche insbesondere leichter Handzuhaben ist und eine erweiterte Funktionalität aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einem gattungsgemäßen Gerät zum Trennen des Kerns, der Schale und des Fleisches einer Frucht, beispielsweise bei einer Ananas, welches einen zylindrischen Entkerner, einen sich radial auf diesem erstreckendes, schraubenförmiges Fleischmesser sowie ein am Außenumfang des Fleischmessers angeordnetes Schalenmesser aufweist, letzteres mit einer vertikalen Höhen zu versehen, die zumindest 2-fachen einer Gewindesteigung des Fleischmessers entspricht. Durch die derart gewählte Höhe wirkt das Schalenmesser zusätzlich zum zylindrischen Entkerner als Führungshilfe beim Schneidvorgang, wodurch das Gerät während des Schneidvorganges besonders einfach Handzuhaben ist. Das Fleischmesser ist dabei schraubenförmig gestaltet und definiert eine bestimmte Gewindesteigung derart, dass es beim Drehen des Gerätes eine schraubenförmige Bewegung mit besagter Gewindesteigung ausführt. Zusätzlich weist das schraubenförmige Fleischmesser zumindest einen Radialschlitz auf, welche es durch Einführen eines entsprechenden Schneidwerkzeuges, beispielsweise eines Messers, einfach ermöglicht, die mittels des Gerätes aus der Frucht herausgeschnittene Fruchtfleischspirale in einzelne Scheiben aufzuteilen. Dabei stellt der zumindest eine Radialschlitz lediglich eine Option zur Einführung des Schneidwerkzeuges dar, so dass mit dem erfindungsgemäßen Gerät auf einfachste Weise sowohl eine Fruchtfleischspirale als auch einzelne, das heißt voneinander getrennte, Fruchtfleischringe herstellbar sind. Mittels des sich über zumindest die, 2,0-fache, vertikale Höhe der Gewindesteigung des Fleischmessers erstreckenden Schalenmessers, lässt sich somit der Schneidvorgang äußerst einfach und gleichzeitig präzise durchführen. Generell sollen durch die gewählte Formulierung all diejenigen Schalenmesser unter den Schutzbereich fallen, deren vertikale Höhe deutlich höher ist als die Ganghöhe des Fleischmessers und zumindest ein 2,0-faches dieser Ganghöhe beträgt. Durch die derart gewählte vertikale Höhe des Schalenmessers und die damit verbundene deutlich vergrößerte Führungsfläche, kann eine signifikant verbesserte Führungsstabilität erreicht werden. Zusätzlich erhöht der zumindest eine Radialschlitz die Funktionalität des Gerätes, da mit dem erfindungsgemäßen Gerät nicht nur Fruchtfleischspiralen, sondern ebenso einfach Fruchtfleischringe herstellbar sind.

Im Sinne der erfindungsgemäßen Lösung, ist der Radialschlitz derart ausgestaltet, dass er eine zweiseitige Führung für ein Schneidwerkzeug, insbesondere für ein Messer, bildet, wobei das Schneidwerkzeug durch den Radialschlitz bis zum Entkerner einführbar ist. Der im Fleischmesser vorgesehene Radialschlitz dient somit als Führung für das einzuführende Messer, wodurch ein exaktes Trennen der zunächst zusammenhängenden Fruchtfleischspirale in einzelne, voneinander getrennte, Fruchtfleischringe leicht möglich ist. Selbstverständlich ist dabei denkbar, dass das Fleischmesser mehrere, das heißt zumindest zwei Radialschlitze aufweist, die jeweils eine zweiseitige Führung für ein Messer bilden, so dass je nach Anordnung der Radialschlitze eine Unterteilung der ursprünglich zusammenhängenden Fruchtfleischspirale in unterschiedlich große Fruchtfleischkreissegmente einfach möglich ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Gerät zum Trennen des Kerns, der Schale und des Fleisches einer Frucht von schräg unten,
- Fig. 2: eine Ansicht wie in Fig. 1, jedoch von schräg oben,
- Fig. 3: eine Seitenansicht auf das erfindungsgemäße Gerät.

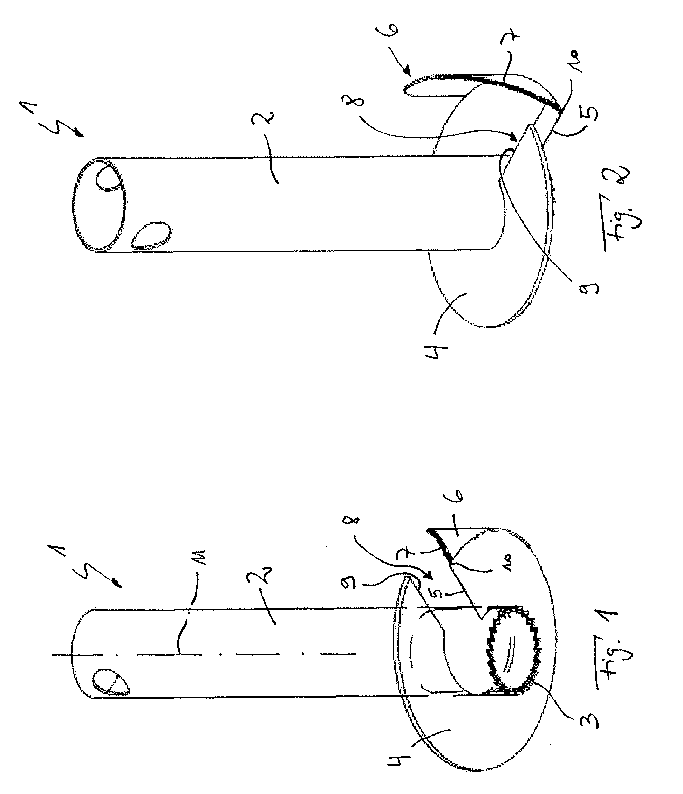

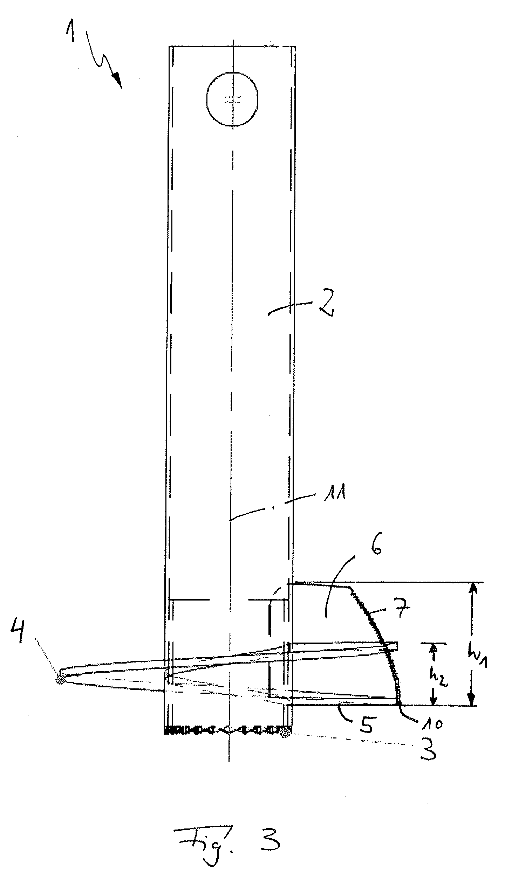

Entsprechend den Fig. 1 bis 3, weist ein erfindungsgemäßes Gerät 1 zum Trennen des Kerns, der Schale und des Fleisches einer Frucht, insbesondere einer Ananas, zumindest einen zylindrischen Entkerner 2 auf, der an einem Ende mit einer Schneidkante 3 versehen ist. Die Schneidkante 3 kann dabei beispielsweise einen Wellen- oder Zackenschliff aufweisen, um das Eindrehen des Gerätes 1 in die zu schneidende Frucht zu erleichtern. Nahe der Schneidkante 3 des Entkerners 2 ist mindestens ein sich radial auf diesem erstreckendes Fleischmesser 4 angeordnet, welches mit einer Schneidkante 5 versehen und schraubenförmig ausgestaltet ist. Am Ende des Fleischmessers 4 und gegenüber dem am Entkerner 2 fixierten Ende, ist dabei ein sich parallel zum Entkerner 2 erstreckendes Schalenmesser 6 vorgesehen, welches ebenfalls mit einer Schneidkante 7 versehen ist. Wie den Fig. 1 bis 3 dabei deutlich zu entnehmen ist, ist das Fleischmesser 4 schraubenförmig ausgestaltet und definiert eine bestimmte Gewindesteigung derart, dass es beim Eindrehen des Gerätes 1 in die zu schneidende Frucht eine schraubenförmige Bewegung mit besagter Gewindesteigung ausführt.

Erfindungsgemäß ist nun das Schalenmesser 6 mit dem Außenumfang des Fleischmessers 4 verbunden und erstreckt sich über eine vertikale Höhe h₁, die zumindest dem 2,0-fachen, der vertikalen Höhe h₂ der Gewindesteigung des Fleischmessers 4 entspricht, wodurch sich der Schneidvorgang äußerst einfach und gleichzeitig präzise durchführen lässt. Durch die derart gewählte vertikale Höhe h₁ des Schalenmessers 6 und die damit verbundene deutlich vergrößerte Führungsfläche, kann eine signifikant verbesserte Führungsstabilität des Gerätes 1 beim Schneidvorgang erreicht werden.

Gemäß den in den Fig. 1 bis 3 gezeigten Ausführungsformen, entspricht dabei die vertikale Höhe h₁ des Schalenmessers 4 dem doppelten der Ganghöhe h₂ des Fleischmessers 4. Darüber hinaus weist das schraubenförmige Fleischmesser 4 zumindest einen Radialschlitz 8 auf, welcher es ermöglicht, die mittels des Gerätes 1 erzeugte Fruchtfleischspirale durch Einführen eines Schneidwerkzeuges, beispielsweise eines Messers, in den Radialschlitz 8 in einzelne Fruchtfleischringe aufzuteilen. Dabei ist der Radialschlitz 8 derart ausgestaltet, dass er eine zweiseitige Führung für das Schneidwerkzeug bildet, welches zum Durchtrennen der Fruchtfleischspirale durch den Radialschlitz 8 bis zum Entkerner 2 einführbar ist. Neben dem verbesserten Handling können mit dem erfindungsgemäßen Gerät 1 somit wahlweise eine Fruchtfleischspirale oder einzelne, das heißt voneinander getrennte, Fruchtfleischringe erzeugt werden.

Bei den gemäß den Fig. 1 bis 3 gezeigten Ausführungsformen ist dabei lediglich ein Radialschlitz 8 im Bereich des Fleischmessers 4 vorgesehen, wobei selbstverständlich denkbar ist, dass weitere, nicht gezeigte, Radialschlitze vorgesehen sind, so dass ein Auftrennen der ursprünglich zusammenhängenden Fruchtfleischspirale in einzelne Fruchtfleischkreissegmente möglich ist. Gemäß der Fig. 2 ist dabei der Radialschlitz 8 in Umfangsrichtung versetzt zum Schalenmesser 4 angeordnet wobei die beiden Führungskanten des Radialschlitzes 8 einerseits durch die Schneidkante 5 des Fleischmessers 4 und andererseits durch eine Kante 9 gebildet werden. Hierbei erstreckt sich das Fleischmesser 4 über weniger als 360°, vorzugsweise über beispielsweise 355°, wobei die verbleibenden 5° die Dicke des Radialschlitzes 8 in Umfangsrichtung definieren. Die vorgenannten Gradzahlen sind dabei selbstverständlich lediglich rein exemplarisch zu verstehen, so dass auch davon abweichende Gradzahlen von der Erfindung umfasst sein sollen.

Bei den gemäß den Fig. 1 bis 3 gezeichneten Ausführungsformen erstreckt sich das Fleischmesser 4 über nahezu 360°, wobei auch eine deutlich kürzere Erstreckung in Umfangsrichtung, beispielsweise über 180°, denkbar ist. Im Vergleich dazu erstreckt sich das Schalenmesser 6 über lediglich einen Teil des Fleischmessers 4, beispielsweise über zumindest 30° entlang des äußeren Umfangs des Fleischmessers 4. Die Schneidkanten 5 und 7 des Fleischmessers 4 und des Schalenmessers 6 kreuzen sich dabei in einem Punkt 10.

An seinem der Schneidkante 3 abgewandten Ende, kann der Entkerner 2 beispielsweise mit einem nicht gezeigten Griff oder einer Antriebseinrichtung, beispielsweise einem Motor, verbunden werden. Wie den Ausführungsformen gemäß den Fig. 1 bis 3 weiter zu entnehmen ist, verläuft die Schneidkante 7 des Schalenmessers 6 schräg zur Achse 11 des Gerätes 1 und weist einen Zackenschliff auf, welcher den Schneidvorgang erleichtern soll. Demgegenüber ist die Schneidkante 5 des Fleischmessers 4 ohne besonderen Wellen- oder Zackenschliff ausgeführt, wodurch eine glatte Schnittfläche erzeugt werden soll. Selbstverständlich können dabei je nach Anwendungsbereich des Gerätes 1 die einzelnen Schneidkanten 3, 5 und 7 einen Wellen- oder Zackenschliff aufweisen oder gerade ausgeführt sein.

Die wesentlichen Vorteile des erfindungsgemäßen Gerätes 1 bestehen in der vereinfachten Handhabung beim Schneidvorgang und in der Möglichkeit auf einfachste Weise aus einer aus der Frucht herausgeschnittenen Fruchtfleischspirale einzelne, das heißt voneinander getrennte, Fruchtfleischringe herzustellen, indem einfach ein entsprechendes Schneidwerkzeug in den Radialschlitz 8 eingeführt wird und dadurch die um den Entkerner 2 gewundene Fruchtfleischspirale durchgeschnitten werden kann.

## Patentansprüche

1. Gerät (1) zum Trennen des Kerns, der Schale und des Fleisches einer Frucht, insbesondere einer Ananas, umfassend zumindest einen zylindrischen Entkerner (2), der an einem Ende mit einer Schneidkante (3) versehen ist, wobei nahe dieser Schneidkante (3) mindestens ein sich radial auf diesem erstreckendes Fleischmesser (4) vorgesehen ist, welches jeweils mit einer Schneidkante (5) versehen ist, und wobei am Ende des Fleischmessers (4) gegenüber dem am Entkerner fixierten Ende ein sich parallel zum Entkerner (2) erstreckendes Schalenmesser (6) vorgesehen Ist, welches ebenfalls mit einer Schneidkante (7) versehen ist, wobei das Fleischmesser (4) schraubenförmig gestaltet ist und eine bestimmte Gewindesteigung definiert, derart, dass es beim Drehen des Gerätes (1) eine schraubenförmige Bewegung mit besagter Gewindesteigung ausführt, **dadurch gekennzeichnet,**
- **dass** das Schalenmesser (6) mit dem Außenumfang des Fleischmessers (4) verbunden Ist und sich über eine vertikale Höhe (h₁) erstreckt, die zumindest dem 2,0-fachen der Gewindesteigung (h₂) des Fleischmessers (4) entspricht,
- **dass** das schraubenförmige Fleischmesser (4) zumindest einen Radialschlitz (8) aufweist, der so ausgestaltet ist, dass er eine zweiseitige Führung für ein Schneidwerkzeug, insbesondere für ein Messer, bildet, wobei das Schneidwerkzeug durch den Radialschlitz (8) bis zum Entkerner (2) einführbar ist.

2. Gerät nach Anspruch 1,
**dadurch gekennzeichnet,**
**dass** der Radialschlitz (8) In Umfangsrichtung versetzt zum Schalenmesser (6) angeordnet ist.

3. Gerät nach Anspruch 1 oder 2,
**dadurch gekennzeichnet,**
**dass** sich das Fleischmesser (4) über weniger als 360" erstreckt, wobei ein in Umfangsrichtung gesehen vorderes und hinteres Ende (5,9) des Fleischmessers (4) jeweils eine Führungskante des Radialschlitzes (8) bilden.

4. Gerät nach einem der Ansprüche 1 bis 3,
**dadurch gekennzeichnet,**
**dass** sich das Schalenmesser (6) über zumindest 30° entlang des äußeren Umfangs des Flelschmessers (4) erstreckt.

5. Gerät nach einem der Ansprüche 1 bis 4,
**dadurch gekennzeichnet,**
**dass** sich die Schneidkanten (5,7) des Fleischmessers (4) und des Schalenmessers (6) in einem Punkt (10) kreuzen.

6. Gerät nach einem der Ansprüche 1 bis 5,
**dadurch gekennzeichnet,**
**dass** der zylindrische Entkerner (2) am anderen Ende mit einem Griff oder einer Antriebseinrichtung, wie beispielsweise einem Motor, versehen ist.

7. Gerät nach einem der Ansprüche 1 bis 6.
**dadurch gekennzeichnet,**
**dass** die Schneidkante (7) des Schalenmessers (6) schräg zur Achse (11) des Gerätes (1) verläuft.

8. Gerät nach einem der Ansprüche 1 bis 7,
**dadurch gekennzeichnet,**
**dass** zumindest die Schneidkante (3) des Entkemers (2) einen Wellen- oder Zackenschliff aufweist.

## Claims

1. Device (1) for separating the core, skin and flesh of a fruit, particularly a pineapple, comprising at least one cylindrical corer (2) which is provided with a cutting edge (3) at one end, at least one flesh cutter (4) being provided close to this cutting edge and extending radially over it, said flesh cutter or cutters each being provided with a cutting edge (5), and wherein at the end of the flesh cutter (4), opposite the end fixed to the corer, there is a peeler (6) extending parallel to the corer (2), said peeler (6) also being provided with a cutting edge (7), the flesh cutter (4) being of helical configuration and defining a specific thread pitch, such that when the device (1) is rotated the flesh cutter performs a helical movement with said thread pitch,
**characterised in that**
- the peeler (6) is connected to the outer circumference of the flesh cutter (4) and extends over a vertical height (h₁) which corresponds to at least 2.0 times the thread pitch (h₂) of the flesh cutter (4),
- the helical flesh cutter (4) comprises at least one radial slot (8) which is configured so as to form a two-sided guide for a cutting tool, particularly a knife, the cutting tool being insertable through the radial slot (8) as far as the corer (2).

2. Device according to claim 1,
**characterised in that**
the radial slot (8) is arranged offset from the peeler (6) in the circumferential direction.

3. Device according to claim 1 or 2,
**characterised in that**
the flesh cutter (4) extends over less than 360°, a front and rear end (5, 9) of the flesh cutter (4), viewed in the circumferential direction, each forming a guiding edge of the radial slot (8).

4. Device according to one of claims 1 to 3,
**characterised in that** the peeler (6) extends over at least 30° along the outer circumference of the flesh cutter (4).

5. Device according to one of claims 1 to 4,
**characterised in that**
the cutting edges (5, 7) of the flesh cutter (4) and peeler (6) intersect at a point (10).

6. Device according to one of claims 1 to 5,
**characterised in that**
the cylindrical corer (2) is provided at the other end with a handle or a drive means such as a motor, for example.

7. Device according to one of claims 1 to 6,
**characterised in that**
the cutting edge (7) of the peeler (6) extends diagonally to the axis (11) of the device (1).

8. Device according to one of claims 1 to 7,
**characterised in that**
at least the cutting edge (3) of the corer (2) is ground to a corrugated or serrated finish.

## Revendications

1. Appareil (1) pour séparer le coeur, la peau et la chair d'un fruit, notamment d'un ananas, comprenant au moins un évideur central (2) cylindrique qui est muni d'une arête coupante (3) à une extrémité, au moins un couteau à chair (4) étant prévu près de cette arête coupante (3), lequel couteau à chair s'étend radialement sur ledit évideur central cylindrique et est muni d'une arête coupante (5), et un couteau à peau (6) étant prévu à l'extrémité du couteau à chair (4), à l'opposé de l'extrémité fixée à l'évideur central, lequel couteau à peau s'étend parallèlement à l'évideur central (2) et est également muni d'une arête coupante (7), le couteau à chair (4) étant conçu en forme d'hélice et définissant un certain pas d'hélice de telle sorte que, lors de la rotation de l'appareil (1), un mouvement hélicoïdal ayant ledit pas d'hélice est réalisé, **caractérisé en ce que**
- le couteau à peau (6) est relié à la circonférence extérieure du couteau à chair (4) et s'étend sur une hauteur verticale (h₁) qui correspond au moins à 2 fois le pas d'hélice (h₂) du couteau à chair (4),
- et le couteau à chair (4) hélicoïdal comporte au moins une fente radiale (8) qui est conçue de telle sorte qu'elle forme un guide bilatéral pour un outil de coupe, notamment pour un couteau, l'outil de coupe pouvant être introduit à travers la fente radiale (8) jusqu'à l'évideur central (2).

2. Appareil selon la revendication 1, **caractérisé en ce que** la fente radiale (8) est agencée décalée dans la direction circonférentielle par rapport au couteau à peau (6).

3. Appareil selon la revendication 1 ou 2, **caractérisé en ce que** le couteau à chair (4) s'étend sur moins de 360°, des extrémités avant et arrière, vues dans la direction circonférentielle, (5, 9) du couteau à chair (4) formant à chaque fois une arête de guidage de la fente radiale (8).

4. Appareil selon l'une des revendications 1 à 3, **caractérisé en ce que** le couteau à peau (6) s'étend sur au moins 30° le long de la circonférence extérieure du couteau à chair (4).

5. Appareil selon l'une des revendications 1 à 4, **caractérisé en ce que** les arêtes coupantes (5, 7) du couteau à chair (4) et du couteau à peau (6) se croisent en un point (10).

6. Appareil selon l'une des revendications 1 à 5, **caractérisé en ce que** l'évideur central (2) cylindrique est muni, à son autre extrémité, d'une poignée ou d'un dispositif d'entraînement, par exemple un moteur.

7. Appareil selon l'une des revendications 1 à 6, **caractérisé en ce que** l'arête coupante (7) du couteau à peau (6) s'étend obliquement par rapport à l'axe (11) de l'appareil (1).

8. Appareil selon l'une des revendications 1 à 7, **caractérisé en ce qu'**au moins l'arête coupante (3) de l'évideur central (2) présente une allure ondulée ou dentée.
